# EUROPÄISCHE PATENTSCHRIFT

(11) **EP 0 393 234 B1**
(45) Veröffentlichungstag und Bekanntmachung des Hinweises auf die Patenterteilung: **15.03.1995**
(21) Anmeldenummer: 89112439.8
(22) Anmeldetag: 07.07.1989
(51) Int. Cl.: F16K 1/30, F17C 13/04

(54) **Gasflaschenventil**
Gas bottle valve
Soupape pour bouteilles de gaz

(30) Priorität: 18.04.1989 DE 3912623
(43) Veröffentlichungstag der Anmeldung: 24.10.1990
(73) Patentinhaber: SCHULZ + RACKOW GASTECHNIK GMBH, D-35075 Gladenbach (DE)
(72) Erfinder: Tolde, Helmut, D-3554 Gladenbach (DE)
(74) Vertreter: Olbricht, Karl Heinrich, Dipl.-Phys.

(56) Entgegenhaltungen:
- FR-A- 1 387 267
- FR-A- 1 530 375
- FR-A- 1 543 482
- FR-A- 2 311 989

## Beschreibung

Die vorliegende Erfindung bezieht sich auf ein Gasflaschenventil gemäß dem Oberbegriff von Anspruch 1.

In der praktischen Verwendung von Flüssiggas durch Einzelverbraucher wird ein Gasverbrauchsgerät über eine Schlauchleitung mit einem Regler, einem Druckminderer, verbunden. Dieser wird zur Gasentnahme auf das Flaschenventil einer gefüllten Flüssiggasflasche aufgesteckt und mittels einer Kupplungsvorrichtung daran verrastet. Nach Entleerung der Flüssiggasflasche wird der Druckregler vom Gasflaschenventil abgekuppelt und auf eine bereitgehaltene volle Flüssiggasflasche wieder aufgesteckt. Die leere Flüssiggasflasche wird auf einer Füllstation neu befüllt und der Wiederverwendung zugeführt.

In DE-A-3 734 050 ist ein Gasflaschenventil beschrieben, dessen Einlaß- und Entnahmeöffnung durch eine innenliegende Tellermembran vor Verunreinigungen geschützt werden soll, die sich allerdings auf oder neben der Membran ansammeln können und beim Füllvorgang einer mit dem Flaschenventil versehenen Gasflasche in diese hineingeblasen werden, unter Umständen aber auch bei der Gasentnahme stören können. Ein wirksamer Schutz nach Art eines Schmutzabweisers ist hier also nur sehr begrenzt gegeben.

Ein Gasflaschenventil gemäß FR-A-1 543 482 hat einen inneren Verschlußkörper als Rückschlagventil, doch befindet sich an diesem selbst der Ventilsitz. Ein äußerer Dichtring ermöglicht einen begrenzten Staubschutz, kann aber Druckdichtigkeit nicht gewährleisten, sobald der Ventilsitz auch nur geringfügig geöffnet ist. Eine Sicherheits-Abdichtung nach außen fehlt also.

Dasselbe gilt für ein Gasflaschenventil nach FR-A-1 387 267, wo zwar das Rückschlagventil zweistufig ausgebildet ist, aber wiederum der Ventilsitz selbst die Abdichtung an zwei unterschiedlichen Durchmessern übernehmen muß, während ein im Gehäusekopf sitzender Dichtring nur bei aufgestecktem Regler an diesem wirksam wird. Auch hier fehlt eine äußere Sicherheits-Abdichtung.

Keinerlei Abdicht-Einsatz ist bei einem Ventil gemäß FR-A-1 530 375 vorhanden. Ein Dichtring im Gehäusekopf wird ebenfalls nur am Schaft des Anschlusses eines aufgesteckten Reglers wirksam, ohne das Flaschenventil für sich - bei abgenommenem Regler - zu schützen.

Gasflaschenventile der eingangs genannten Bauart sind bei einem sog. Sicherheitsverschluß gemäß FR-A-2 311 989 bzw. DE-A-1 650 177 mit einem innenliegenden Dichtring versehen, der zum einen bei nichtaufgestecktem Druckregler einen Verschlußstopfen abdichten soll, der das Ventil nach oben hin verschließt, um ein Eindringen von Fremdkörpern zu verhindern. Mit Aufgestecktem Regler übernimmt der Dichtring zum anderen das Abdichten der Steckverbindung gegenüber der Atmosphäre, indem der Verschlußstopfen beim Aufstecken des Druckreglers abwärts aus dem Dichtring herausgedrückt wird, in den zugleich ein zylindrischer Zapfen des Druckreglers eindringt. Dadurch, daß letzterer beim Gasverbraucher verbleibt, während die mit dem Flaschenventil verbundene Flüssiggasflasche zur Füllstation transportiert wird, ergibt sich zwangsläufig, daß ein Druckregler mit immer neuen Flaschenventilen zusammengekuppelt wird.

Nun sind aus wirtschaftlichen Gründen größere Toleranzen bei der Herstellung von Flaschenventilen und Druckreglern vorgegeben. Insbesondere haben der Verschlußstopfen des Flaschenventils und der Zapfen des Druckreglers meist unterschiedliche Durchmesser. Die Folge ist, daß bei der Kombination des Druckreglers mit jeweils anderen Flaschenventilen stark verschiedene Flächenpressungen am Dichtring des jeweiligen Gasflaschenventils auftreten.

Das kann zu Dichtproblemen führen, zumal der Mehrzweck-Dichtring im Flaschenventil unter dauernder Belastung durch den Verschlußstopfen steht, ähnlich einer statischen Dichtung. Bedingt durch Fertigungstoleranzen der Abmessungen und durch die Oberflächenqualität ergeben sich beim Aufstecken des Druckreglers jeweils andere räumliche Verhältnisse und physikalische Lokalbedingungen. Zur Abdichtung müßte der Dichtring in kürzester Zeit, nämlich während des Kupplungsvorganges, den Ausgleich bewirken. Das allgemein nachgiebige Dichtungsmaterial benötigt jedoch lange Relaxationszeiten, um seine unsprüngliche Gestalt und zumindest näherungsweise das ursprüngliche Elastizitätsverhalten wieder anzunehmen. Unvermeidlich ergeben sich daher Undichtigkeiten.

Es ist ein wichtiges Ziel der Erfindung, unter Überwindung der Nachteile vor allem des letztgenannten Standes der Technik mit wirtschaftlichen Mitteln ein Gasflaschenventil mit verbesserter Dichtungsanordnung zu schaffen, die bei nichtaufgestecktem Druckregler das Flaschenventil wirksam vor dem Eindringen von Fremdkörpern schützt und bei aufgestecktem Druckregler eine zuverlässige Abdichtung zur Atmosphäre gewährleistet.

Hauptmerkmale der Erfindung sind im kennzeichnenden Teil von Anspruch 1 angegeben. Ausgestaltungen sind Gegenstand der Ansprüche 2 bis 8.

Erfindungsgemäß ist ein erster Dichtring auf der Oberseite eines unten an dem Verschlußkörpers befindlichen Bundes angeordnet. Der Verschlußkörper hat an der Außenöffnung des Kopfteils radiales Bewegungsspiel, wogegen er mit enger Passung in der Gleitführung geführt ist, die als axial kurze zylindrische Wandung gestaltet ist, an welche sich in Gasentnahme-Strömungsrichtung ein zweites Dichtelement mit einer inneren, im unbelasteten Zustand radial einspringenden Anlagefläche des nutgelagerten Dichtrings anschließt.

Der wesentliche Vorteil dieser Anordnung besteht darin, daß der im Ventil innen/unten befindliche erste Dichtring den druckdichten Abschluß nach außen auch dann übernimmt, wenn der obere zweite Dichtring diese Funktion beim Auf- und Entkuppeln eines Reglers noch nicht oder nicht mehr erfüllt. Mit dieser zweistufigen Sicherheits-Einrichtung geht die Erfindung über den Stand der Technik deutlich hinaus, denn auf diese Weise können auch größere Durchmesser des mit dem Regler aufgesteckten Zapfens gut aufgenommen werden, ohne daß der gasdichte Abschluß beeinträchtigt würde. Zugleich werden die bislang bestehenden Schwierigkeiten dauerhaft beseitigt, die sich vor allem bei der Gasflaschen-Verwendung unter rauhen Einsatzbedingungen immer wieder zeigten. Aufsteckkappen, die verlorengehen oder unbenutzt bleiben könnten, sind nach der Erfindung völlig entbehrlich. Durch die doppelte Abdichtung ist erstmals auch das Problem der Durchmesser-Toleranzen gelöst, und man kann davon ausgehen, daß die Beanspruchungen jedes Dichtringes für sich im wesentlichen gleichartig bleiben. Dadurch ist eine einwandfreie Abdichtfunktion selbst unter ungünstigen Umständen sichergestellt.

Vorteilhaft ist die Ausführungsform von Anspruch 2, wonach der zweite Dichtring im Axialrichtung wenigstens halb so lang bzw. hoch ist wie der Verschlußkörper. Dies bewirkt eine breite Abdichtfläche, wobei zugleich genügend radiale Elastizität bzw. nachgiebiges Bewegungsspiel vorhanden ist, um eine satte Anlage entweder des Verschlußkörpers oder des von oben eindringenden Regler-Zapfens zu erlauben.

Bei der in Anspruch 3 vorgesehenen Bauform ist der Kopfteil mit dem Ventilgehäuse einstückig, in welches der Verschlußkörper sowie ein Träger für den Ventilsitz und das Rückschlagventil von unten her einsetzbar sind. Eine alternative Bauweise nach Anspruch 4 besteht darin, daß der Kopfteil ein lösbares Bauelement ist, das samt eingesetztem Verschlußkörper von oben in das Ventilgehäuse einschraubbar ist. Hinsichtlich der Montage bietet diese Ausführungsform beträchtliche Vorteile.

Gemäß Anspruch 5 sitzt der erste Dichtring in einer äußeren Umfangsnut des Verschlußkörpers; durch Zusammenwirken mit einer Fase oder Einlauf-Verjüngung an der Gleitführung ist ein sattes, gleichmäßiges Anliegen des ersten Dichtringes in der Verschlußstellung gewährleistet.

Bei der Ausführungsform nach Anspruch 6 ist der Verschlußkörper zumindest mit seinem Bund in einer Gleithülse geführt, die im Kopf- bzw. Einschraubteil des Ventilgehäuses sitzt und Durchbrechungen zum Gasdurchtritt aufweist. Eine derartige Gleithülse schließt Verkantungen des Verschlußkörpers aus, die sonst unter Umständen auftreten könnten.

Der Verschlußkörper wird ferner laut Anspruch 7 zweckmäßig nach oben von einer Druckfeder belastet, die sich mit ihrem unteren Ende im Inneren des Ventilgehäuses abstützt, wobei das obere Ende der Druckfeder von unten an dem Bund oder an einer kopfseitigen Innenfläche des allgemein hutförmigen Verschlußkörpers anliegt. Man erreicht dadurch eine optimale Anlage des oberen Feder-Endes, nämlich entweder auf breitestem Durchmesser oder im obersten Innenbereich. Die untere Abstützung der Druckfeder kann gemäß Anspruch 8 von einem Bodenteil der Gleithülse gebildet sein, was zur Vereinfachung der Montage beiträgt. In jedem Falle ist es günstig, wenn die Druckfeder sich im Ventilgehäuse unabhängig von der Feder des Rückschlagventils abstützt, so daß eine schwimmende Federlagerung vermieden wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine Seitenansicht eines Gasflaschenventils mit aufgestecktem Druckregler in auseinandergezogener Darstellung, teilweise im Axialschnitt,
- Fig. 2: eine vergrößerte Ansicht des Gasflaschenventils von Fig. 1 in zwei verschiedenen Betriebsstellungen, ohne Druckregler, und
- Fig. 3: eine Axialschnittansicht noch einer anderen Gasflaschenventil-Ausführungsform mit einteiligem Ventilgehäuse.

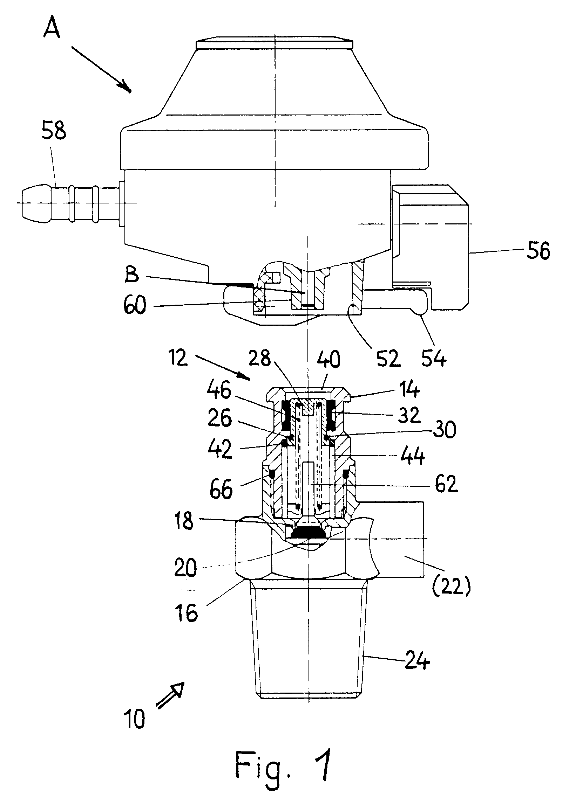

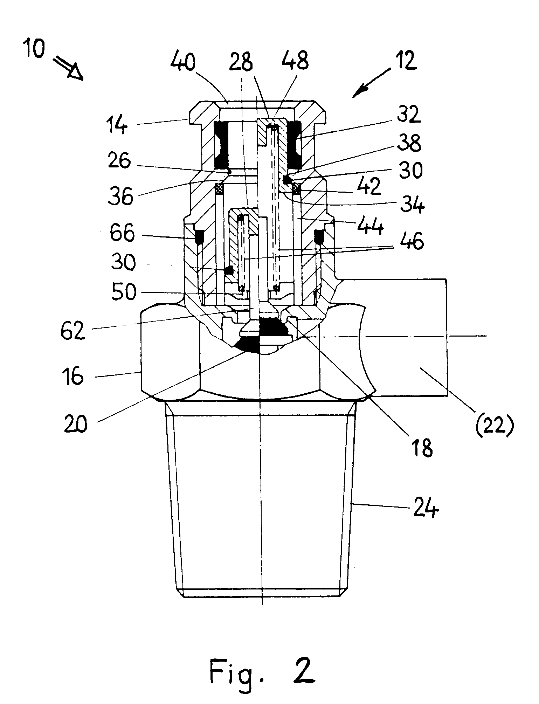

Ein allgemein mit 10 bezeichnetes Gasflaschenventil ist in Fig. 1 bei abgenommenem Druckregler A dargestellt; Einzelheiten des Gasflaschenventils 10 sind in Fig. 2 besser zu erkennen. Es hat einen Kopfteil 12 mit einem Wulst 14, hinter den eine Raste bzw. ein Rasthebel 54 des aufzusteckenden Druckreglers A einhaken kann. Ein Schaltknebel 56 dient zur Arretierung der Raste 54, sobald diese unter dem Wulst 14 eingefallen ist. Von dem Aufsteckregler A zweigt ein Gasentnahme-Schlauchanschluß 58 ab.

Im Ventilgehäuse 16 des Gasflaschenventils 10 befindet sich ein Rückschlagventil 20, das in der gezeichneten Schließstellung unter Federkaft an einem Ventilsitz 18 anliegt. Schematisch ist angedeutet, daß seitlich ein Sicherheitsventil 22 angeordnet ist. Nach unten setzt sich das Ventilgehäuse 16 mit einem Schraubkonus 24 fort, der in einen gegengleichen Gewindekonus einer (nicht gezeichneten) Gasflasche einschraubbar ist.

Wie Fig. 2 deutlicher erkennen läßt, befindet sich im Kopfteil 12 eine Gleitführung 26 für einen Verschlußkörper 28, der gegen über dem Kopfteil 12 nach außen durch eine Druckfeder 26 vorgespannt ist. Der Verschlußkörper 28 hat eine zentrische Ausnehmung, die auf einem Ventilstift 62 des Rückschlagventils 20 gleitbar ist. Die vorgenannten Bauteile lassen sich bequem montieren, indem sie in einen Kopfteil 12 eingelegt werden, worauf dieser von oben in das Ventilgehäuse 16 eingeschraubt wird. Ein Dichtungsring 66 sorgt für die Abdichtung zwischen dem schraubbaren Kopfteil 12 und dem Ventilgehäuse 16.

Der Verschlußkörper 28 kann, wie gezeichnet, im Durchmesser abgesetzt sein. Er hat unten einen Bund 34, an dessen Oberseite sich ein erster Dichtring 30 in einer Umfangsnut 38 befindet. Dieser wirkt mit einer Fase bzw. Einlauf-Verjüngung 36 am unteren Ende der Gleitführung 26 zusammen. In Gasentnahme-Strömungsrichtung ist ein zweiter Dichtring 32 vorgeordnet, der in einer Ringnut im Kopfteil 12 unterhalb einer Außenöffnung 40 angeordnet ist. Der zweite Dichtring 32 übernimmt die Abdichtung des Verschlußkörpers 28 an dessen Außendurchmesser, während der erste Dichtring 30 am größeren Innendurchmesser des Bundes 34 den Verschlußkörper 28 gegenüber der Fase 36 der Gleitführung 26 abdichtet. Ersichtlich bildet diese Anordnung insgesamt eine Art zweites Rückschlagventil, das eine Abdichtfunktion nicht nur nach außen, sondern auch dann übernehmen kann, wenn das eigentliche Rückschlagventil 20 aus irgendeinem Grunde undicht sein sollte.

Man erkennt ferner, daß die Bauweise des Gasflaschenventils 10 im Kopfteil 12 unterhalb der Außenöffnung 40 Platz für eine größere Axiallänge des zweiten Dichtringes 32 läßt, wodurch sich die kurze Gleitführung 26 nach außen fortsetzt. Verschlußkörper 28 hat allgemein Hutform mit einer oberen Innenfläche 48, an der sich das obere Ende der Druckfeder 46 abstützt. Diese ist zylindrisch und stützt sich mit ihrem unteren Ende an einem Boden 50 einer Gleithülse 42 ab, die von unten in den schraubbaren Kopfteil 12 eingesetzt ist und am Umfang Durchbrechungen 44 aufweist, die einen Gasdurchlaß ermöglichen.

Die Arbeitsweise ergibt sich aus Fig. 2. Dort ist in der rechten Hälfte die Schließstellung dargestellt, in welcher der Verschlußkörper 28 mit den beiden Dichtringen 30, 32 die vollständige Abdichtung nach außen bewirkt. Wird nun der Aufsteckregler A angebracht (vergl. Fig. 1), wobei dessen Aufnahme 52 den Wulst 14 übergreift, bis mittels der Raste 54 die Festlegung am Kopfteil 12 des Gasflaschenventils 10 erfolgt, so dringt der Zapfen 60 durch die Außenöffnung 40 in den zweiten Dichtring 32 ein. Dadurch wird der Verschlußkörper 28 nach unten geschoben und die Druckfeder 46 zusammengepreßt (Fig. 2 links). In dieser Stellung ist eine Betätigung des Rückschlagventils 20 durch den Steuerstift B möglich, welcher in dem Zapfen 60 geführt ist und beim Öffnen der Absperreinrichtung am (nicht dargestellten) Gasverbraucher nach unten ausfährt. Wie man sieht, wird die Druckfeder 46 und damit auch der hutförmige Verschlußkörper 28 auf dem Ventilstift 62 geführt, während zusätzlich der Bund 34 in der Gleithülse 42 gleitbar abgetützt und gefürt ist. Letztere ist mit ihrem Bodenteil 50 auf dem Ventilstift 62 zentriert.

Bei allen diesen Vorgängen und insbesondere nach dem Abnehmen des Aufsteckreglers A bleibt das Gasflaschenventil 10 durch den zweiten Dichtring 32 einerseits und - in Schließstellung des Verschlußkörpers 28 - durch den ersten Dichtring 30 zur Atmosphäre hin abgedichtet, so daß keinerlei Fremdkörper ins Inneredes Gasflaschenventils 10 gelangen können. Unabhängig davon besteht eine Inspektions-Möglichkeit des Rückschlagventils 20, weil der Kopfteil 12 (falls erforderlich) aus dem Ventilgehäuse 16 ausgeschraubt werden könnte.

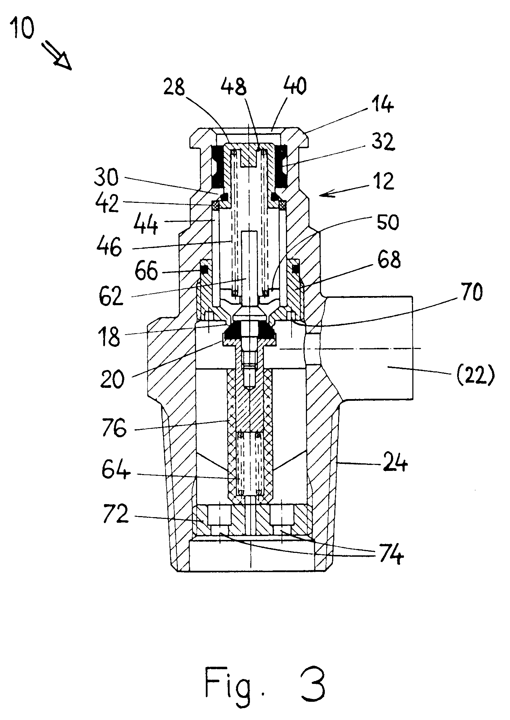

Im Ausführungsbeispiel der Fig. 3 hat das Gasflaschenventil 10 eine ähnliche Außenkontur wie in Fig. 2. Auch die im Inneren des Kopfteils 12 befindlichen Bauelemente sind von gleicher Ausführungsform. Der in Fig. 3 dargestellte Typ unterscheidet sich jedoch von dem vorbeschriebenen Gasflaschenventil darin, daß der Kopfteil 12 hier mit dem Ventilgehäuse 16 einstückig ist. Der Ventilsitz 18 für das Rückschlagventil 20 ist an einem einschraubbaren Träger 68 angeordnet, welcher an seiner Unterseite mit Einschraubhilfen 70 für ein (nicht gezeichnetes) Steckwerkzeug versehen ist. Das Rückschlagventil 20 selbst bildet samt Ventilfeder 64 und Führungshülse 76 eine Baugruppe, die mittels eines Einsetzes 72 von unten in das Ventilgehäuse 16 einführbar und verschraubbar ist. Durchlässe 74 im Einsatz 72 gestatten des Gasdurchtritt. - Man erkennt, daß auch bei dieser Bauform eine vollständige Abdichtung des Gasflaschenventils 10 durch die Verschlußelemente 28, 30, 32 gewährleistet ist, und zwar unabhängig davon, ob das Gasflaschenventil 10 etwa noch zusätzlich mit einer (nicht gezeichneten) Überfallkappe versehen ist oder nicht.

Ein wichtiger Vorteil der Erfindung besteht darin, daß in Verbindung mit dem neuartigen Gasflaschenventil 10 die bereits in außerordentlich großen Stückzahlen bei den Verbrauchern vorhandenen Aufsteckregler A nun mit größerer Sicherheit und vollständigem Schutz gegen das Eindringen von Fremdkörpern, Verschmutzungen u.dgl. benutzt werden können. Das geht beträchtlich über die Möglichkeiten herkömmlicher Gasflaschenventile hinaus.

Für die Erfindung ist es ferner ohne Belang, ob - wie dargestellt - das Gasflaschenventil 10 ein Sicherheitsventil 22 aufweist oder nicht.

## Patentansprüche

1. Gasflachenventil (10) zur lösbaren Verbindung mit einer Flüssiggas wie Propan, Butan oder deren Gemische enthaltenden Gasflasche, mit einem Kopfteil (12), der außen einen umlaufenden Wulst (14) als Gegenlager für einen aufsteckbaren Membrandruckregler (A) zur Entnahme von Flüssiggas und innen einen nutgelagerten Dichtring (32) zur Gleitanlage eines Zapfens (50) des Membrandruckreglers (A) aufweist, mit einem Ventilgehäuse (16), welches einen Ventilsitz (18) für ein federbelastetes, über einen mit dem Membrandruckregler (A) verbundenen Steuerstift (B) betätigbares Rückschlagventil (20) sowie unten einen Schraubkonus (24) aufweist, und mit einem in eine Gleitführung (26) des Kopfteils (12) ragenden, federbelasteten Verschlußkörper (28), der im Durchmesser abgesetzt und nach außen abgedichtet ist, dadurch **gekennzeichnet**, daß ein erster Dichtring (30) auf der Oberseite eines unten an dem Verschlußkörper (28) befindlichen Bundes (34) angeordnet ist und daß der Verschlußkörper (28) an der Außenöffnung des Kopfteils (12) radiales Bewegungsspiel hat, hingegen mit enger Passung in der Gleitführung (26) geführt ist, die als axial kurze zylindrische Wandung gestaltet ist, an welche sich in Gasentnahme-Strömungsrichtung ein zweites Dichtelement mit einer inneren, im unbelasteten Zustand radial einspringenden Anlagefläche des nutgelagerten Dichtringes (32) anschließt.

2. Gasflaschenventil nach Anspruch 1, dadurch **gekennzeichnet**, daß der nutgelagerte Dichtring (32) in Axialrichtung wenigstens halb so lang bzw. hoch ist wie der Verschlußkörper (28).

3. Gasflaschenventil nach Anspruch 1, dadurch **gekennzeichnet**, daß das Ventilgehäuse (16) mit dem Kopfteil (12) einstückig ist und das der Verschlußkörper (28), ein Träger (68) für den Ventilsitz (18) sowie das Rückschlagventil (20) von unten in das Ventilgehäuse (16) einsetzbar sind (Fig. 5).

4. Gasflaschenventil nach Anspruch 1, dadurch **gekennzeichnet**, daß der Kopfteil (12) ein lösbares Bauelement ist, das samt eingesetztem Verschlußkörper (28) von oben in das Ventilgehäuse (16) einschraubbar ist (Fig. 4).

5. Gasflaschenventil nach einem der Ansprüche 1 bis 4, dadurch **gekennzeichnet**, daß der erste Dichtring (30) in einer äußeren Umfangsnut (38) des Verschlußkörpers (28) sitzt und mit einer Fase oder Einlauf-Verjüngung (36) an der Gleitführung (26) zusammenwirkt (Fig. 2).

6. Gasflaschenventil nach wenigstens einem der Ansprüche 1 bis 5, dadurch **gekennzeichnet**, daß der Verschlußkörper (28) zumindest mit seinem Bund (34) in einer Gleithülse (42) geführt ist, die im Kopf- bzw. Einschraubteil (12) des Ventilgehäuses (16) sitzt und Durchbrechungen (44) zum Gasdurchtritt aufweist.

7. Gasflaschenventil nach einem der Ansprüche 3 bis 6, dadurch **gekennzeichnet**, daß eine den Verschlußkörper (28) nach oben belastende Druckfeder (46) sich mit ihrem unteren Ende im Inneren des Ventilgehäuses (16) abstützt und daß das obere Ende der Druckfeder (46) von unten an dem Bund (34) oder an einer kopfseitigen Innenfläche (48) des allgemein hutförmigen Verschlußkörpers (28) anliegt.

8. Gasflaschenventil nach Anspruch 6 und 7, dadurch **gekennzeichnet**, daß die untere Abstützung der Druckfeder (46) von einem Bodenteil (50) der Gleithülse (42) gebildet ist.

## Claims

1. Gas bottle valve (10) for the detachable connection to a gas bottle containing liquid gas such as propane, butane, or mixtures thereof, with a head assembly (12) comprising outside a peripheral collar (14) as an end support for a plug-on membrane pressure regulator (A) for the offtake of liquid gas, and comprising inside a groove-borne seal ring (32) for sliding fit of a pivot (50) of the membrane pressure regulator (A); with a valve housing (16) comprising a valve seat (18) for a spring-biassed check valve (20) operable by an actuating pin (B) connected to the membrane pressure regulator (A), and comprising a threaded cone (24) at the bottom; and with a spring-biassed plug (28) that extends into a slideway (26) of the head assembly (12), that has an offset diameter and that is sealed towards ambience, wherein a first seal ring (30) is mounted on the top of a collar (34) at the bottom of the plug (28) and wherein the plug (28) has radial play towards the outside opening of the head assembly (12) while it is guided with tight fit in the slideway (26) which is shaped as a short axial cylindrical wall followed in gas-downstream direction by a second seal member having an inner engaging-surface of the groove-borne seal ring (32) that projects inwardly if in a no-load condition.

2. Gas bottle valve according to claim 1 wherein the groove-borne seal ring (32) is axially at least half as long or high, respectively, as the plug (28).

3. Gas bottle valve according to claim 1 wherein the valve housing (16) is integral with the head assembly (12) and wherein the plug (28), a support (68) for the valve seat (18) and wherein the check valve (20) can be inserted from below into the valve housing (16, Fig. 5).

4. Gas bottle valve according to claim 1 wherein the head assembly (12) is a detachable component adapted to be screwed in from above into the valve housing (16) together with the inserted plug (28, Fig. 4).

5. Gas bottle valve according to any one of claims 1 to 4, wherein the first seal ring (30) is mounted in an outer peripheral groove (38) of the plug (28) and cooperates with a bevel or pilot chamfer (36) at the slideway (26, Fig. 2).

6. Gas bottle valve according to at least one of claims 1 to 5, wherein the plug (28) is guided at least with a shoulder (24) inside a slide cage (42) that is situated in the head or screw-in assembly (12) of the valve housing (16) and that has relieves (44) permitting gas flow.

7. Gas bottle valve according to any one of claims 3 to 6, wherein a compression spring (46) upwardly biassing the plug (28) is supported at its lower end inside the valve housing (16) and wherein from below, the upper end of the compression spring (46) fits the shoulder (34) or a headside inner end face (48) of the generally hat-shaped plug (28).

8. Gas bottle valve according to claims 6 and 7, wherein the lower support of the compression spring (46) is formed by a bottom portion (50) of the slide cage (42).

## Revendications

1. Soupape pour bouteilles de gaz (10) pour une connexion détachable à une bouteille de gaz contenant du gaz liquide tel que propane, butane ou autre mélange, avec une partie de tête (12) ayant à l'extérieur un renflement circulaire (14) servant de butée à un régulateur de pression à membrane (A) enfichable pour la prise de gaz liquide et à l'intérieur un anneau joint (32) logé dans une rainure pour le contact en glissement d'un tenon (50) du régulateur de pression à membrane (A), avec une boîte de soupape (16) ayant un siège de soupape (18) pour une soupape de non-retour (20) chargée par ressort et actionnable par une cheville de commande (B) reliée au régulateur de pression à membrane (A) ainsi qu'un cône vissable (24), et avec un élément de fermeture (28) chargé par ressort, allant dans un guidage à glissement (26) de la partie de tête (12), décalé en son diamètre et étanché vers l'extérieur, caractérisée en ce qu'un premier anneau joint (30) est disposé sur le côté supérieur d'un collet (34) se trouvant en-bas sur l'élément de fermeture (28) et que l'élément de fermeture (28) a du jeu radial à l'ouverture extérieure de la partie de tête (12) alors qu'il est guidé avec un ajustement étroit dans le guidage à glissement (26) en forme de paroi cylindrique axialement courte, à laquelle se rajoute en direction du flux de prise de gaz un second élément joint avec une surface de contact intérieure radialement saillante en état non chargé de l'anneau joint (32) logé dans une rainure.

2. Soupape pour bouteilles de gaz selon la revendication 1, caractérisée en ce que l'anneau joint (32) logé dans une rainure a en direction axiale au moins la demi-longueur ou demi-hauteur de l'élément de fermeture (28).

3. Soupape pour bouteilles de gaz selon la revendication 1, caractérisée en ce que la boîte de soupape (16) est d'une pièce avec la partie de tête (12) et que l'élément de fermeture (28), un support (68) pour le siège de soupape (18) ainsi que la soupape de non-retour (20) peuvent être placés dans la boîte de soupape (16) par en bas (figure 5).

4. Soupape pour bouteilles de gaz selon la revendication 1, caractérisée en ce que la partie de tête (12) est un élément détachable qui, ensemble avec l'élément de fermeture (28) inséré, peut être vissé par en haut dans la boîte de soupape (16) (figure 4).

5. Soupape pour bouteilles de gaz selon une des revendications 1 à 4, caractérisée en ce que le premier anneau joint (30) est logé dans une rainure circonférentielle extérieure (38) de l'élément de fermeture (28) et qu'il agit ensemble avec un chanfrein ou un étranglement d'entrée (36) sur le guidage à glissement (26) (figure 2).

6. Soupape pour bouteilles de gaz selon au moins une des revendications 1 à 5, caractérisée en ce que l'élément de fermeture (28) est guidé au moins avec son collet (34) dans une douille de glissement (42) située dans la tête ou partie vissable (12) de la boîte de soupape (16) et ayant des ajours (44) pour laisser passer le gaz.

7. Soupape pour bouteilles de gaz selon une des revendications 3 à 6, caractérisée en ce qu'un ressort de pression (46) chargeant l'élément de fermeture (28) vers le haut s'appuie avec son extrémité inférieure à l'intérieur de la boîte de soupape (16) et que l'extrémité supérieure du ressort de pression (46) touche par en bas le collet (34) ou une surface intérieure (48) du côté de la tête de l'élément de fermeture (28) ayant généralement la forme d'un chapeau.

8. Soupape pour bouteilles de gaz selon la revendication 6 ou 7, caractérisée en ce que l'appui inférieur du ressort de pression (46) est formé par une partie de base (50) de la douille de glissement (42).
